# EUROPEAN PATENT APPLICATION

(11) **EP 4 730 088 A1**
(43) Date of publication of application: **22.04.2026**
(21) Application number: 24858264.5
(22) Date of filing: 08.08.2024
(51) Int. Cl.: G06F 3/041, G06F 3/044

(54) **METHOD FOR IDENTIFYING TOUCH-CONTROL OPERATION, AND ELECTRONIC DEVICE**

(30) Priority: 29.08.2023 CN 202311101829; 11.09.2023 CN 202311170451
(71) Applicant: Huawei Technologies Co., Ltd., Shenzhen, Guangdong 518129 (CN)
(72) Inventor: ZHU, Yicheng, Shenzhen, Guangdong 518129 (CN); CHEN, Leilei, Shenzhen, Guangdong 518129 (CN); GENG, Hao, Shenzhen, Guangdong 518129 (CN); YANG, Guang, Shenzhen, Guangdong 518129 (CN); XU, Chang, Shenzhen, Guangdong 518129 (CN)
(74) Representative: Körber, Martin Hans
(86) International application number: PCT/CN2024/110803
(87) International publication number: WO 2025/044721

(57) **Abstract**

This application discloses a method for identifying a touch operation and an electronic device, and relates to the field of terminal technologies. This can improve accuracy of identifying a touch operation of a user, and further ensure accurate response to the touch operation of the user. In particular, when there is water on a touchscreen of the electronic device, a problem of misidentification and misresponse of a touch point caused by the water can be avoided. In this application, the electronic device can identify whether there is water in a touch area, for example, static water, and can identify whether there is water whose track changes in the touch area, and after identifying the water, the electronic device adopts a corresponding suppression means, for example, suppressing response to touch effect of the touch area where there is water, suppressing response to touch effect of the touch area through which water passes, and suppressing response to touch effect within a preset range of a historical touch track. This can avoid a problem of misidentification and misresponse of a touch point caused by the water, and improve user experience.

## Description

This application claims priorities to Chinese Patent Application No. 202311101829.6, filed with the China National Intellectual Property Administration on August 29, 2023 and entitled "METHOD FOR IDENTIFYING TOUCH OPERATION AND ELECTRONIC DEVICE", and to Chinese Patent Application No. 202311170451.5, filed with the China National Intellectual Property Administration on September 11, 2023 and entitled "METHOD FOR IDENTIFYING TOUCH OPERATION AND ELECTRONIC DEVICE", both of which are incorporated herein by reference in their entireties.

### TECHNICAL FIELD

This application relates to the field of terminal technologies, and in particular, to a method for identifying a touch operation and an electronic device.

### BACKGROUND

Currently, an electronic device mainly identifies a touch location of a user based on a change of a capacitive signal on a touchscreen, and then identifies a touch operation of the user. For example, when a finger of the user touches the touchscreen, a capacitive signal strength changes. When a capacitive signal strength change exceeds a specific threshold, the electronic device uses a touch location of the finger of the user as a touch point. When the finger of the user double-taps the touchscreen, the electronic device identifies two adjacent touch points. When the finger of the user slides on the touchscreen, the electronic device identifies consecutive touch points. Based on this principle, the electronic device can identify a touch operation of the user, for example, a tapping operation or a sliding operation.

However, when there is water in an environment in which the electronic device is located, for example, when it rains or when there is water on the finger of the user, water may exist on the touchscreen of the electronic device. Because the water on the touchscreen also causes a change of a capacitive signal on the touchscreen, the electronic device may misidentify, as a touch point, a location at which the capacitive signal changes due to the water, and mistakenly respond, affecting user experience.

### SUMMARY

This application provides a method for identifying a touch operation and an electronic device. This can improve accuracy of identifying a touch operation of a user, and further ensure accurate response to the touch operation of the user. In particular, when there is water on a touchscreen of the electronic device, a problem of misidentification and misresponse of a touch point caused by the water can be avoided.

To achieve the foregoing objective, this application uses the following technical solutions.

According to a first aspect, a method for identifying a touch operation is provided, where the method includes: An electronic device detects first touch information; the electronic device determines a first touch area on a touchscreen of the electronic device based on the first touch information, where the first touch area includes a first area and a second area; and the electronic device obtains first historical touch information related to the first touch information; determines, based on the first historical touch information, a capacitive signal strength of the first area, and a capacitive signal strength of the second area, that the second area is a finger touch area; and reports a forecast point of the second area.

In an example, the electronic device may detect the first touch information by using a sensor (like a touch sensor and/or a pressure sensor). For example, the first touch information may indicate but is not limited to information such as a touch location and a touch force. In an example the forecast point is a touchscreen location that is detected by the electronic device and that is subject to touch effect. The touch effect may come from a touch auxiliary tool like a finger of the user, a stylus, a touch pen, or a touch ball, or may come from water or another body. When the electronic device identifies that the touch effect comes from a touch auxiliary tool like a finger of the user, a stylus, a touch pen, or a touch ball, the electronic device reports a corresponding forecast point as a touch point, to respond to a subsequent touch operation of the user.

According to the solution provided in the first aspect, the electronic device may identify whether the touch area is an action area of the user, and report the related forecast point as a touch point when identifying that the touch area is the action area of the user, to normally respond to touch effect of the user. Based on this, accuracy of identifying a touch operation of the user can be improved, thereby ensuring accurate response to the touch operation of the user.

In a possible implementation, the method further includes: The electronic device determines, based on the first historical touch information, the capacitive signal strength of the first area, and the capacitive signal strength of the second area, that the first area is a water touch area; and the electronic device skips reporting a forecast point of the first area when reporting the forecast point of the second area. For example, the first historical touch information may be historical touch information most recently detected by the electronic device. Certainly, the first historical touch information may alternatively be other historical touch information detected by the electronic device. This is not limited in this application. In this way, the electronic device may identify whether there is water in the touch area, and after identifying the touch area, use a corresponding suppression means, for example, suppressing reporting of a forecast point for touch effect of the touch area where there is water, to suppress responding to touch effect of the water. Based on this, a problem of misidentification and misresponse of a touch point caused by water can be avoided, and user experience can be improved.

In a possible implementation, that the electronic device determines, based on the first historical touch information, the capacitive signal strength of the first area, and the capacitive signal strength of the second area, that the second area is the finger touch area includes: The electronic device determines, based on a touch area corresponding to the first historical touch information, distribution of a positive capacitive signal strength and a negative capacitive signal strength in the first area, and distribution of a positive capacitive signal strength and a negative capacitive signal strength in the second area, that the second area is the finger touch area.

In an example, when a difference between a quantity of forecast points whose capacitive signal strengths are negative values and a quantity of forecast points whose capacitive signal strengths are positive values in the first area is greater than a first value and/or a difference between a sum of absolute values of the capacitive signal strengths with negative values and a sum of absolute values of the capacitive signal strengths with positive values in the first area is greater than a second value; and when a difference between a quantity of forecast points whose capacitive signal strengths are positive values and a quantity of forecast points whose capacitive signal strengths are negative values in the second area is greater than the first value and/or a difference between a sum of absolute values of the capacitive signal strengths with positive values and a sum of absolute values of the capacitive signal strengths with negative values in the first area is greater than the second value, the electronic device may determine that the second area is a finger touch area.

In an example, when a difference between a quantity of forecast points whose capacitive signal strengths are positive values and a quantity of forecast points whose capacitive signal strengths are negative values in the first area is greater than a first value and/or a difference between a sum of absolute values of the capacitive signal strengths with positive values and a sum of absolute values of the capacitive signal strengths with negative values in the first area is greater than the second value; and when a difference between a quantity of forecast points whose capacitive signal strengths are negative values and a quantity of forecast points whose capacitive signal strengths are positive values in the second area is greater than the first value and/or a difference between a sum of absolute values of the capacitive signal strengths with negative values and a sum of absolute values of the capacitive signal strengths with positive values in the first area is greater than the second value, the electronic device may determine that the second area is a finger touch area.

In this way, the electronic device may identify, by comparing multi-frame touch information that is detected a plurality of times and that is from the touchscreen, whether there is water on the touchscreen, and suppress touch point reporting in a screen area through which the water passes, to avoid a problem of misidentification and misresponse of a touch point caused by the water, thereby improving user experience.

In a possible implementation, the first touch information and the first historical touch information correspond to a same sliding operation of a user, and the first area is within a preset range of the touch area corresponding to the first historical touch information. In this way, the electronic device can accurately identify the water in the first touch area, and suppress touch report points within the preset range of the historical touch track, to avoid a problem of misidentification and misresponse of a touch point caused by the water.

In a possible implementation, the touch area corresponding to the first historical touch information and the first area are interconnected or overlap partially. In this way, the electronic device can accurately identify the water in the first touch area, and suppress touch point reporting on a path through which the water flow passes, to avoid a problem of misidentification and misresponse of a touch point caused by water flowing to the edge area.

In a possible implementation, the first historical touch information corresponds to a sliding operation, and the method further includes: The electronic device obtains a historical sliding direction and a historical sliding speed of the sliding operation based on the first historical touch information; the electronic device determines a predicted location based on the historical sliding direction and the historical sliding speed; and the electronic device reports the forecast point of the second area when the second area is within a preset range of the predicted location. In this way, the electronic device may predict, based on the historical sliding direction and the historical sliding speed of the sliding operation, a touch location on which the sliding operation may be performed in the future, filter forecast points in the first touch information based on the possible touch location, and determine that a forecast point most likely to be a touch point of the user and report the forecast point, to avoid a problem of misidentification and misresponse of the touch point caused by the water, and improve user experience.

In a possible implementation, the method further includes: When the first area is outside the preset range of the predicted location, the electronic device skips reporting the forecast point of the first area. In this way, the electronic device may predict, based on the historical sliding direction and the historical sliding speed of the sliding operation, a touch location on which the sliding operation may be performed in the future, filter forecast points in the first touch information based on the possible touch location, and determine a forecast point that is most likely to be of water, and suppress reporting of the forecast point, to avoid a problem of misidentification and misresponse of a touch point caused by the water, and improve user experience.

In a possible implementation, the first historical touch information corresponds to a tapping operation, and that the electronic device determines, based on the first historical touch information, the capacitive signal strength of the first area, and the capacitive signal strength of the second area, that the second area is the finger touch area includes: The electronic device determines, by comparing a capacitive signal strength with a smallest absolute value in the first area and the second area with a capacitive signal strength with a smallest absolute value in the touch area corresponding to the first historical touch information, that the first area is the water touch area. In this way, whether the finger of the user is leaving the touchscreen can be detected, and when it is determined that the finger of the user is leaving the touchscreen, the electronic device gives up reporting of a forecast point in an area in which water is located, to resolve a problem of unresponsive tapping.

In a possible implementation, that the electronic device determines, by comparing the capacitive signal strength with the smallest absolute value in the first area and the second area with the capacitive signal strength with the smallest absolute value in the touch area corresponding to the first historical touch information, that the second area is the finger touch area includes: The electronic device determines, when a capacitive signal strength with a smallest absolute value in the first touch area decreases by more than a defined threshold compared with the capacitive signal strength with the smallest absolute value in the touch area corresponding to the first historical touch information, that the first area is the water touch area, and the first touch area does not meet a predefined condition. In this way, whether the finger of the user is leaving the touchscreen can be detected, and when it is determined that the finger of the user is leaving the touchscreen, the electronic device gives up reporting of a forecast point in an area in which water is located, to resolve a problem of unresponsive tapping.

In a possible implementation, the method further includes: The electronic device detects second touch information; the electronic device determines a second touch area based on the second touch information; and the electronic device determines, based on a capacitive signal strength of the second touch area, that the second touch area is a water touch area, and skips reporting a forecast point of the second touch area. In this way, the electronic device may identify whether there is water in the touch area, and after identifying the touch area, use a corresponding suppression means, for example, suppressing reporting of a forecast point for touch effect of the touch area where there is water, to suppress responding to touch effect of the water. Based on this, a problem of misidentification and misresponse of a touch point caused by water can be avoided, and user experience can be improved.

In a possible implementation, that the electronic device determines, based on the capacitive signal strength of the second touch area, that the second touch area is the water touch area includes: When the capacitive signal strength of the second touch area meets a predefined condition, the electronic device determines that the second touch area is the water touch area. In this way, the electronic device can accurately identify whether there is water in the touch area, to suppress reporting of a forecast point for touch effect of the touch area where there is water, thereby suppressing response to the touch effect of the water.

In a possible implementation, that the electronic device determines the first touch area based on the first touch information includes: The electronic device identifies a forecast point with a smallest absolute value of a capacitive signal strength based on the first touch information; and the electronic device uses the forecast point with the smallest absolute value of the capacitive signal strength as a start point, sequentially traverses other adjacent forecast points on the touchscreen from near to far, to find a forecast point that meets a preset capacitive signal strength threshold, and determines the first touch area. In this way, the electronic device can accurately identify a touchscreen area that is touched.

In a possible implementation, the first historical touch information corresponds to the sliding operation, and the method further includes: The electronic device adjusts the preset capacitive signal strength threshold in a process of determining the first touch area. In this way, a jump of a touch point in a same interconnected area can be reduced, and a problem of sliding jitter can be resolved.

According to a second aspect, an electronic device is provided. The electronic device includes: a touchscreen, configured to receive a touch operation of a user; a memory, configured to store computer program instructions; and a processor, configured to execute the computer program instructions, to support the electronic device in implementing the method according to any one of the possible implementations of the first aspect.

According to a third aspect, a computer-readable storage medium is provided. The computer-readable storage medium stores computer program instructions. When the computer program instructions are executed by a processor, the method according to any one of the possible implementations of the first aspect is implemented.

According to a fourth aspect, a computer program product including instructions is provided. When the computer program product runs on a computer, the computer is enabled to implement the method according to any one of the possible implementations of the first aspect.

According to a fifth aspect, a chip system is provided. The chip system includes a processing circuit and a storage medium. The storage medium stores computer program instructions. When the computer program instructions are executed by a processor, the method according to any one of the possible implementations of the first aspect is implemented. The chip system may include a chip, or may include a chip and another discrete component.

### BRIEF DESCRIPTION OF DRAWINGS

FIG. 1 is a diagram of a hardware structure of an electronic device according to an embodiment of this application;
FIG. 2 is a diagram of a software structure of an electronic device according to an embodiment of this application;
FIG. 3 is a flowchart 1 of a method for identifying a touch operation according to an embodiment of this application;
FIG. 4 is a diagram of touch information according to an embodiment of this application;
FIG. 5A is a diagram of a process of determining a touch area according to an embodiment of this application;
FIG. 5B is a diagram of response effect of a touch operation according to an embodiment of this application;
FIG. 6 is a flowchart 2 of a method for identifying a touch operation according to an embodiment of this application;
FIG. 7 is an example diagram of touch information detected in a track water scenario according to an embodiment of this application;
FIG. 8 is an example diagram of a touch area in a track water scenario according to an embodiment of this application;
FIG. 9 is an example diagram of touch information detected in another track water scenario according to an embodiment of this application;
FIG. 10 is an example diagram of a touch area in another track water scenario according to an embodiment of this application;
FIG. 11 is a diagram of an unresponsive sliding case according to an embodiment of this application;
FIG. 12 is a diagram of an unresponsive tapping case according to an embodiment of this application;
FIG. 13 is a diagram of a sliding jitter case according to an embodiment of this application;
FIG. 14 is a flowchart 3 of a method for identifying a touch operation according to an embodiment of this application;
FIG. 15 is a diagram 1 of a touch information optimization method according to an embodiment of this application;
FIG. 16 is a diagram 2 of a touch information optimization method according to an embodiment of this application;
FIG. 17 is a diagram 3 of a touch information optimization method according to an embodiment of this application; and
FIG. 18 is a diagram 4 of a touch information optimization method according to an embodiment of this application.

### DESCRIPTION OF EMBODIMENTS

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

The terms "first", "second", and the like are merely intended to distinguish between different objects, and impose no limitation on locations, sequences, priorities, quantities, content, or the like of the described objects. For example, if a described object is a "field", ordinal numbers before "fields" in a "first field" and a "second field" do not limit a location or an order between the "fields". The "first" and the "second" do not limit whether the "fields" modified by the "first" and "second" are in a same message, and the "first" and the "second" do not limit a sequence of the "first field" and the "second field". For another example, if a described object is a "level", ordinal numbers before "levels" in a "first level" and a "second level" do not limit a priority between the "levels". For another example, a quantity of described objects is not limited by an ordinal number, and may be one or more objects. For example, for a "first device", a quantity of "devices" may be one or more. In addition, objects modified by different prefixes may be the same or different. For example, if a described object is a "device", a "first device" and a "second device" may be a same type of device, or different types of devices. For another example, if a described object is "information", "first information" and "second information" may be information of a same content or information of different content. In conclusion, in embodiments of this application, use of the prefix words, for example, ordinal numbers, used to distinguish between the described objects constitutes no limitation on the described objects. For descriptions of the described objects, refer to context descriptions in claims or embodiments. Use of the prefix words should not constitute a redundant limitation.

In addition, in embodiments of this application, "connection" may indicate a direct connection or an indirect connection, or may indicate an electrical connection or a communication connection. For example, a connection between two electrical elements A and B may mean that A is directly connected to B, or may mean that A is indirectly connected to B through another electrical element or a connection medium, or may mean that A is indirectly connected to B through another communication device or a communication medium, provided that A and B can communicate with each other.

As described above, based on a conventional touch location identification technology, when detecting that a capacitive signal strength at a location on a touchscreen changes (for example, an absolute value exceeds a specific threshold), an electronic device identifies the location as a touch point. Based on this, if an absolute value of a capacitive signal strength at a location on the touchscreen instantaneously exceeds a specific threshold due to water on the touchscreen, the electronic device may identify a tapping operation; or if an absolute value of a capacitive signal strength at a location on the touchscreen continuously exceeds a specific threshold for more than a specific duration due to water on the touchscreen, the electronic device may identify a touch and hold operation; or if absolute values of capacitive signal strengths at locations on a track of the touchscreen successively exceed a specific threshold due to water on the touchscreen, the electronic device may identify a sliding operation. In this case, the following problems may occur.

Problem 1: When there is water on the touchscreen of the electronic device, assuming that a user does not perform any touch operation, the electronic device mistakenly uses an action location of the water on the touchscreen as a touch point, and further incorrectly identifies, based on the touch point, touch effect of the water as a tapping operation, a touch and hold operation, a sliding operation, or the like performed by the user for responding. This brings poor experience to the user, and may seriously cause a great loss to the user, for example, deleting information by mistake, or sending a message by mistake.

Problem 2: When there is water on the touchscreen of the electronic device, assuming that a user performs a first operation (the first operation is a touch operation), and the first operation causes a change of a capacitive signal strength on the touchscreen, and the water on the touchscreen also causes a change of a capacitive signal strength on the touchscreen. In this case, the electronic device responds to the first operation of the user, and incorrectly identifies touch effect of the water as an operation of the user and responds to the operation. Therefore, the user feels a problem like unresponsive tapping, unresponsive sliding, sliding rebound, tapping jitter, sliding jitter, or the like.

To improve accuracy of identifying a touch operation of the user by the electronic device, so as to ensure that the electronic device can accurately respond to the touch operation of the user, in particular, when there is water on the touchscreen of the electronic device, to avoid a problem of misidentification and misresponse of a touch point caused by the water and improve user experience, an embodiment of this application provides a method for identifying a touch operation. According to the method, whether there is water on the touchscreen can be identified, and when it is identified that there is water in an area on the touchscreen, a forecast point is not reported to avoid misidentification and misresponse of touch effect related to the water.

In some embodiments of this application, the forecast point is a touchscreen location that is detected by the electronic device and that is subject to touch effect. The touch effect may come from a touch auxiliary tool like a finger of the user, a stylus, a touch pen, or a touch ball, or may come from water or another body. When the electronic device identifies that the touch effect comes from a touch auxiliary tool like a finger of the user, a stylus, a touch pen, or a touch ball, the electronic device may report a corresponding forecast point, that is, use the corresponding forecast point as a touch point, to respond to a subsequent touch operation of the user.

In some embodiments of this application, the electronic device may be an electronic device having a touchscreen. For example, the electronic device may include but is not limited to a smartphone, a netbook, a tablet computer, a smart drawing board, a handwriting pad, a smart watch, a smart band, a phone watch, smart glasses, a smart camera, a palmtop computer, a vehicle-mounted computer, a personal computer (personal computer, PC), a personal digital assistant (personal digital assistant, PDA), a portable multimedia player (portable multimedia player, PMP), an augmented reality (augmented reality, AR)/virtual reality (virtual reality, VR) device, a smart television, a projection device, or a motion-sensing game console in a human-computer interaction scenario. Alternatively, the electronic device may be an electronic device of another type or structure having a touchscreen. This is not limited in this application.

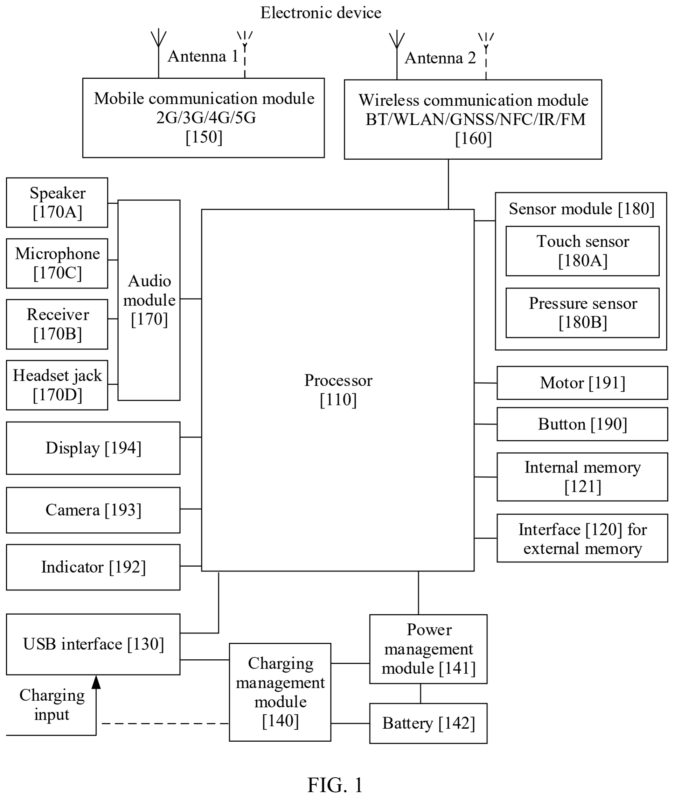

In an example, FIG. 1 is a diagram of a hardware structure of an electronic device according to an embodiment of this application.

As shown in FIG. 1, the electronic device may include a processor 110, a memory (including an interface 120 for external memory and an internal memory 121), a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, and the like. The sensor module 180 may include a touch sensor 180A and a pressure sensor 180B. Optionally, the sensor module 180 may include a gyroscope sensor, a barometric pressure sensor, a magnetic sensor, an acceleration sensor, a distance sensor, an optical proximity sensor, a fingerprint sensor, a temperature sensor, an ambient light sensor, a bone conduction sensor, and the like.

It may be understood that the structure illustrated in this embodiment of the present invention does not constitute a specific limitation on the electronic device. In some other embodiments of this application, the electronic device may include more or fewer components than those shown in the figure, or a combination of a part of the components, or splits from a part of the components, or an arrangement of different components. The components shown in the figure may be implemented by hardware, software, or a combination of software and hardware.

The processor 110 may include one or more processing units. For example, the processor 110 may include an application processor (application processor, AP), a modem processor, a graphics processor (graphics processing unit, GPU), an image signal processor (image signal processor, ISP), a controller, a video codec, a digital signal processor (digital signal processor, DSP), a baseband processor, and/or a neural network processing unit (neural network processing unit, NPU), or the like. Different processing units may be independent components, or may be integrated into one or more processors.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serail clock line, SCL). In some embodiments, the processor 110 may include a plurality of groups of I2C buses. The processor 110 may be separately coupled to the touch sensor 180A, the pressure sensor 180B, the microphone, the camera 193, and the like through different I2C bus interfaces. For example, the processor 110 may be coupled to the touch sensor 180A and the pressure sensor 180B through the I2C interface, so that the processor 110 communicates with the touch sensor 180A or the pressure sensor 180B through the I2C bus interface, to implement a touch function of the electronic device.

In this embodiment of this application, the processor 110 may obtain, through the I2C bus interface, touch information that is of the user and that is detected by the touch sensor 180A and the pressure sensor 180B on the touchscreen, to obtain a touch operation of the user, for example, a tapping (for example, a single tapping or a double tapping) operation, a sliding operation, a touch and hold operation, or a drag operation, and determine an input event corresponding to the touch operation, to respond to the touch operation.

For example, in some embodiments of this application, the processor 110 may determine forecast points based on touch information such as a touch location and a touch force that are detected by the touch sensor 180A and the pressure sensor 180B, use, as a touch point, a forecast point that is in the forecast points and that belongs to effect of a touch auxiliary tool like a finger of the user, a stylus, a touch pen, or a touch ball, and determine a touch operation based on the touch point, for example, a tapping (for example, a single tapping or a double tapping) operation, a sliding operation, a touch and hold operation, or a drag operation.

In some embodiments of this application, the processor 110 may determine forecast points based on a touch location and a touch force that are detected by the touch sensor 180A and the pressure sensor 180B in a period of time, use, as a touch point, a forecast point that is in the prediction points and that is effect of a touch auxiliary tool like a finger of the user, a stylus, a touch pen, or a touch ball, and determine a touch operation based on touch information of consecutive touch points in the period of the time, for example, a double-tapping operation, a sliding operation, a touch and hold operation, or a drag operation.

The charging management module 140 is configured to receive a charging input from a charger. The power management module 141 is configured to connect to the battery 142, the charging management module 140, and the processor 110. The power management module 141 receives input from the battery 142 and/or the charging management module 140, and supplies power to the processor 110, the internal memory 121, the display 194, the camera 193, the wireless communication module 160, and the like.

A wireless communication function of the electronic device may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna of the electronic device may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device and that includes a 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194.

The wireless communication module 160 may provide a wireless communication solution that is applied to the electronic device and that includes a wireless local area network (wireless local area network, WLAN) (for example, a Wi-Fi network), Bluetooth BT, a global navigation satellite system (global navigation satellite system, GNSS), frequency modulation (frequency modulation, FM), a near field communication (near field communication, NFC) technology, an infrared (infrared, IR) technology, or the like.

In some embodiments, in the electronic device, the antenna 1 and the mobile communication module 150 are coupled, and the antenna 2 and the wireless communication module 160 are coupled, so that the electronic device can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like.

The interface 120 for external memory may be configured to connect to an external memory card like a micro SD card, to extend a storage capability of the electronic device. The external memory card communicates with the processor 110 through the interface 120 for external memory, to implement a data storage function.

The internal memory 121 may be configured to store computer executable program code. For example, a computer program may include an operating system program and an application. The executable program code includes instructions. The processor 110 runs the instructions stored in the internal memory 121, to perform various function applications and data processing of the electronic device. The internal memory 121 may include a program storage area and a data storage area. The program storage area may store an operating system, an application required by at least one function, and the like. The data storage area may store data created during use of the electronic device, and the like. In addition, the internal memory 121 may include a highspeed random access memory, or may include a non-volatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications of the electronic device and data processing.

The electronic device may implement an audio function such as music playing or recording through the audio module 170, the speaker 170A, the receiver 170B, the microphone 170C, the application processor, and the like.

The touch sensor 180A is also referred to as a "touch panel". The touch sensor 180A may be disposed on the display 194, and the touch sensor 180A and the display 194 form a touchscreen, which is also referred to as a "touch screen" or a "touchscreen" (this application uses a "touchscreen" as an example for related description). The touch sensor 180A is configured to detect touch information performed on or near the touch sensor 180A, such as a touch location and a touch force.

In some embodiments of this application, the touch sensor 180A may transfer the detected touch information to an upper-layer module, for example, the processor 110, so that the processor 110 determines a touch operation and an input event.

In some embodiments of this application, when there is water on the touchscreen, the touch sensor 180A of the electronic device may also detect touch effect of the water. In other words, touch information detected by the touch sensor 180A may not be caused by a touch operation of the user, but is caused by the touch effect of the water.

The pressure sensor 180B is configured to sense a pressure signal, and may convert the pressure signal into an electrical signal. In some embodiments, the pressure sensor 180B may be disposed on the display 194. There are a plurality of types of pressure sensors, such as a resistive pressure sensor, an inductive pressure sensor, and a capacitive pressure sensor. The capacitive pressure sensor may include at least two parallel plates made of conductive materials. When a force is applied to the pressure sensor, capacitance between electrodes changes. The electronic device determines a strength of pressure (namely, a touch force) based on a capacitance change. A larger absolute value of a capacitive signal strength indicates a larger touch force, and a smaller absolute value of the capacitive signal strength indicates a smaller touch force. In some embodiments, touch operations that are performed at a same touch location but having different touch forces may correspond to different operation instructions.

In some embodiments of this application, when a touch operation of the user is performed on the display 194, the electronic device may detect, by using the pressure sensor 180B, touch information corresponding to the touch operation, such as a touch location and a touch force.

In some embodiments of this application, when there is water on the touchscreen, the pressure sensor 180B of the electronic device may also detect touch effect of the water. In other words, touch information detected by the pressure sensor 180B may not be caused by a touch operation of the user, but is caused by the touch effect of the water.

In embodiments of this application, the touch operation of the user detected by the touch sensor 180A may be an operation performed by the user on the touchscreen by using a finger, or may be an operation performed by the user on the touchscreen by using a touch auxiliary tool like a stylus, a touch pen, or a touch ball. This is not limited in this application.

In addition, for descriptions of hardware such as the button 190, the motor 191, and the indicator 192, refer to the conventional technology. Details are not described again in embodiments of this application.

It may be understood that the structure illustrated in FIG. 1 in this application does not constitute a specific limitation on the electronic device. In some other embodiments of this application, the electronic device may include more or fewer components than those shown in the figure, or a combination of a part of the components, or splits from a part of the components, or an arrangement of different components. The components shown in the figure may be implemented by hardware, software, or a combination of software and hardware.

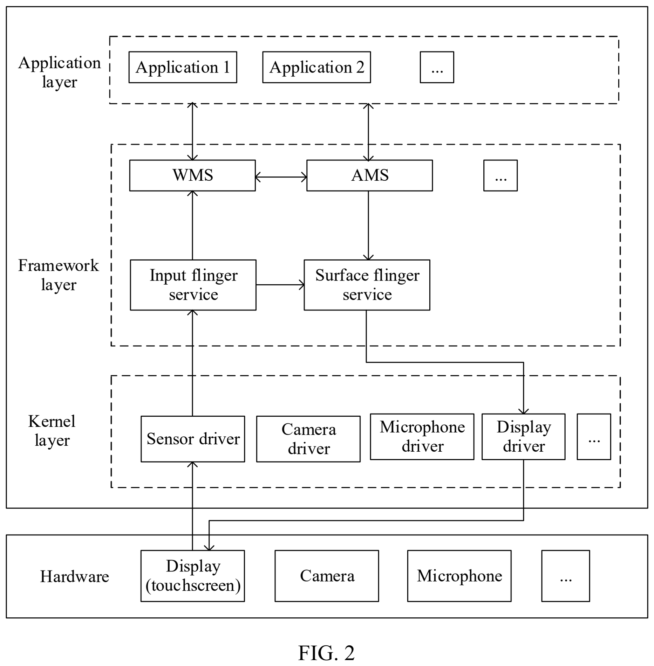

In a possible example, FIG. 2 is a diagram of a software structure of an electronic device according to an embodiment of this application. As shown in FIG. 2, an operating system of the electronic device may include an application layer, a framework (framework, FWK) layer, and a kernel layer.

The application layer may include a series of applications, such as Application 1, Application 2, ... shown in FIG. 2. For example, the application may include but is not limited to a native application (for example, an application integrated in an operating system) like Mailbox, Camera, Gallery, Calendar, Call, Map, Navigation, Bluetooth, Music, Video, or SMS message, or a third-party application (for example, an application downloaded and installed by a user by using an application store). This is not limited in this embodiment of this application.

The framework layer provides an application programming interface (application programming interface, API) and a programming framework for an application at the application layer. As shown in FIG. 2, the framework layer may provide a window manager service (WindowManagerService, WMS), an activity manager service (activity management service, AMS), an input flinger (InputFlinger) service, and a surface flinger (SurfaceFlinger) service.

The window manager service is used to provide window management, for example, creating a window, starting a window, deleting a window, moving a window, and managing a location/size/style of a window. In some embodiments, the window manager service may further be used to manage window information. The window information may include but is not limited to information such as a window identifier, an identifier of an interface displayed in a window, and a virtual screen object corresponding to a window. For example, the virtual screen object corresponding to the window is a displayId of a virtual screen on which the window is located. For example, the displayId may be a parameter of an int type.

The activity manager service is responsible for managing an activity, and is responsible for work such as starting, switching, and scheduling of each component in a system, and management and scheduling of applications. Specifically, data classes used to store a process (Process), an activity (Activity), and a task (Task) are defined in the AMS. The data class corresponding to the process (Process) may include process file information, memory status information of the process, an activity, a service, and the like included in the process. Information about an activity can be saved in a task stack (ActivityStack). The ActivityStack is used to schedule activities of an application in a unified manner. The ActivityStack may specifically store information about all running activities. The ActivityStack can also store information about historical activities.

In embodiments of this application, the AMS of the electronic device may schedule, based on an indication of the WMS, the activity corresponding to the target window to respond to the input event of the user.

The input flinger service is used to collect and process user control information and distribute an input event. The input flinger service may include the following two classes: InputReader and InputDispatcher. The InputReader is configured to: determine forecast points based on the touch information, use, as a touch point, a forecast point that is in the prediction points and that is effect of a touch auxiliary tool loke a finger of the user, a stylus, a touch pen, or a touch ball, and then determine a touch operation based on one or more touch points and convert the touch operation into a specific input event. The InputDispatcher is configured to distribute a subsequent input event. For example, the InputDispatcher may send the input event to a WMS through a dedicated channel between the WMS and the InputDispatcher. After receiving the input event, the WMS may distribute the input event to an activity (Activity) corresponding to a target window in the AMS. Then, the activity may respond to the input event.

The surface flinger service is used to compose graphic display data from a plurality of sources. For example, it is assumed that an application layer corresponding to a content interface includes four layers: a status bar layer, a navigation bar layer, a wallpaper layer, and an initiator icon layer. Drawing and rendering of the status bar layer, the navigation bar layer, the wallpaper layer, and the initiator icon layer are performed separately. The surface flinger service mainly composes the status bar layer, the navigation bar layer, the wallpaper layer, the initiator icon layer, and the like, and then sends a composed result for display.

Certainly, the framework layer may be further used to provide another management service, like a package manager service, a content provider service, a phone manager service, a resource manager service, a notification manager service, a location manager service, and a view system (view system). The package manager service may be used to manage a program in a system. The content provider service is used to support one application in accessing data of another application (for example, a contact database), or sharing data of the application with another application. The data may include a video, an image, audio, calls that are made and received, a browsing history, a bookmark, a phone book, and the like. The phone manager service may be used to provide an obtaining method for accessing a status and information related to communication of a terminal device, and provide a communication function of the terminal device, for example, call status management (including answering, declining, and the like). The resource manager service may be used to provide access to a non-code resource, for example, access to a local character string, an icon, an image, a graph, a video file, or a layout file (Layoutfile). The notification manager service is used to provide a function of displaying customized prompt information in a status bar. The prompt information may be used to convey a notification message, and may automatically disappear after a short pause without requiring a user interaction. The location manager service is used to provide a service related to processing of a geographical location. The view system (view system) may be configured to construct a display interface of an application. The view system includes a visual control, such as a text box (TextBox) control, a list (List) control, a grid (Grid) control, a button (Button) control, and a web browser control that can be embedded.

The kernel layer is a layer between hardware and software. The kernel layer may include a camera driver, a display driver, a microphone driver, a sensor driver, and the like. The hardware includes a camera, a display (touchscreen), a camera, and a microphone.

In this embodiment of this application, when the user performs a touch operation on the touchscreen, the sensor driver may detect touch information based on a sensor (for example, a touch sensor and/or a pressure sensor) disposed on the touchscreen, and provide the touch information for the input flinger service. The input flinger service identifies forecast points based on the touch information, and uses, as a touch point, a forecast point that is in the forecast points and that is effect of a touch auxiliary tool like a finger of the user, a stylus, a touch pen, or a touch ball, to determine the touch operation of the user and a corresponding input event.

For example, in some embodiments of this application, the control operation received by the electronic device may include but is not limited to a tapping (for example, a single tapping or a double tapping) operation, a press and hold operation, a sliding operation, a drag operation, or the like performed by the user on the touchscreen by using a finger or a touch auxiliary tool like a stylus, a touch stylus, or a touch ball. This is not specifically limited in embodiments of this application.

It should be noted that FIG. 2 is merely an example of the diagram of the software structure of the electronic device, and merely layers and software modules related to the solutions of this application are simply enumerated. During actual application, the operating system of the electronic device may further include another layer, and each layer may further include another software module configured to realize one or more functions or services. This is not specifically limited in embodiments of this application.

In this embodiment of this application, when detecting touch information, the electronic device may analyze the touch information to determine whether there is water at a corresponding forecast point. When determining that there is no water at the forecast point, the electronic device may use the forecast point as a touch point to report the touch point (also referred to as reporting the forecast point), determine a touch operation based on the touch point, convert the touch operation into a specific input event, and then distribute a corresponding activity (Activity) to respond to the input event. When determining that there is water at the forecast point, the electronic device may give up performing touch reporting on the forecast point, and stop a subsequent processing procedure, to avoid misidentification and misresponse of touch effect related to the water.

For example, the electronic device may be responsible for identifying a forecast point by using the input flinger service shown in FIG. 2, and when identifying that touch information is touch information of the user, the electronic device uses the forecast point as a touch point to determine a touch operation, converts the touch point into a specific input event, and then distributes the input event; or when identifying that touch information is touch effect of water, the electronic device abandons using the forecast point as a touch point to stop a subsequent processing procedure.

In some embodiments of this application, during touch information analysis, the input flinger service can identify whether the touch information is from water. For example, when there is water in an area on the touchscreen, the input flinger service can identify whether the detected touch information is caused by the water in the area, and does not report the forecast point when the touch information comes from the water. Based on this, misidentification and misresponse of touch effect related to the water can be avoided.

In some embodiments of this application, when the touch information is analyzed, the input flinger service can further identify whether the touch information is from track water, where the track water is water whose touch area on the touchscreen changes. For example, when a water drop on the touchscreen rolls from a first location to a second location, the input flinger service can identify whether the detected touch information is caused by the rolling water drop. For another example, it is assumed that there is water on a finger of the user. When the finger of the user slides on the touchscreen, the input flinger service can identify a part of the detected touch information coming from the finger of the user and a part coming from the water on the finger of the user. Based on this, misidentification and misresponse of touch effect related to the track water can be avoided.

The following specifically describes, with reference to the accompanying drawings and specific embodiments, a method for identifying a touch operation provided in this embodiment of this application.

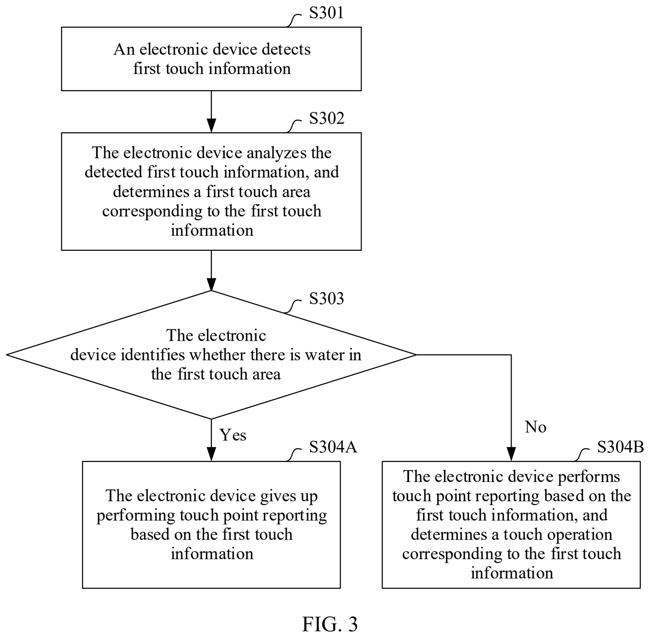

FIG. 3 is a flowchart of a method for identifying a touch operation according to an embodiment of this application. As shown in FIG. 3, the method for identifying the touch operation provided in an embodiment of this application includes S301 to S303 and S304A/S304B.

S301: An electronic device detects first touch information.

In some embodiments of this application, the first touch information indicates information such as a touch location (also referred to as a forecast point) and a touch force. For example, a sensor (for example, a touch sensor and/or a pressure sensor) may be disposed on the touchscreen. The sensor is capable of detecting touch information of a touch operation performed on any location on the touchscreen. The electronic device may detect, by using the touch sensor and/or the pressure sensor, a location of a touch acting on the touchscreen and a corresponding touch force.

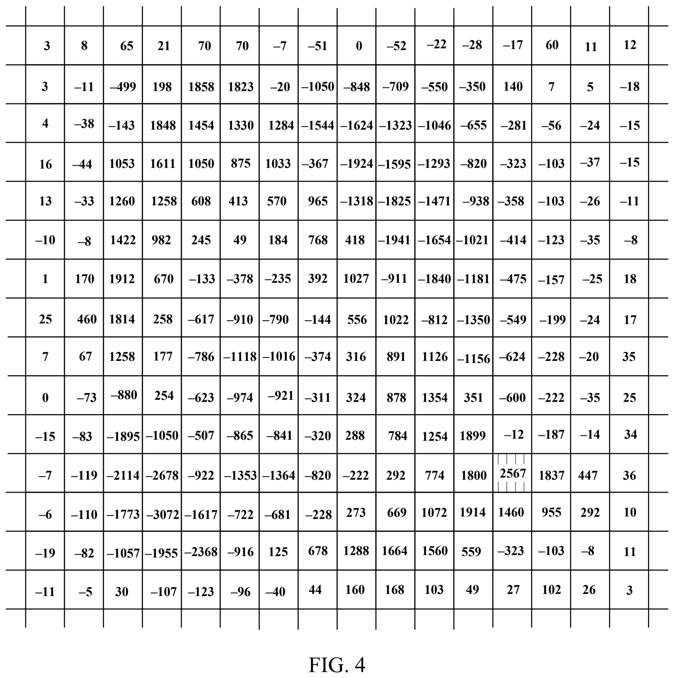

In some embodiments of this application, the touch location may be represented by coordinate information on the touchscreen. FIG. 4 is a diagram of touch information according to an embodiment of this application. As shown in FIG. 4, a touchscreen may be divided into several small grids, and a location of a touch acting on any location in a grid may be represented by coordinate information of the grid. In some embodiments of this application, coordinate information of each grid may be represented by coordinates of a center point of the grid.

In some embodiments of this application, a grid-based touchscreen layout manner shown in FIG. 4 is merely an example. A grid precision is not limited in this embodiment of this application, and depends on a specific touch sensing capability and a related setting of the electronic device. For example, it is assumed that sensor units of the electronic device are disposed at corresponding locations of the touchscreen at an interval of 4 mm. During correlation calculation, the electronic device may grid the touchscreen per 4 mm.

In some embodiments of this application, a touch force acting on any touch location may be represented by a detected capacitive signal strength at the touch location. In some embodiments of this application, a larger absolute value of a capacitive signal strength indicates a larger touch force, and a smaller absolute value of the capacitive signal strength indicates a smaller touch force. As shown in FIG. 4, a number in each grid is a capacitive signal strength that is detected by the sensor and that is at a location corresponding to the grid.

S302: The electronic device analyzes the detected first touch information, and determines a first touch area corresponding to the first touch information.

In an example, the electronic device may first identify a location (for example, a location grid) with a maximum touch force on the touchscreen based on the first touch information, use the location grid with the maximum touch force as a start point, then sequentially traverse other adjacent location grids on the touchscreen from near to far, and sequentially add a location grid with a touch force greater than a threshold to obtain the final first touch area.

In some embodiments of this application, when there is touch effect performed on a location of the touchscreen, a touch force that is detected by the sensor and that acts on the location is usually greater than a specific threshold. Based on this, the electronic device may determine the first touch area by analyzing a touch force at each touch location, where the first touch area is an area on which touch effect is performed.

For example, the electronic device may first identify, based on the first touch information, a location grid with a touch force greater than a first threshold on the touchscreen, then identify a location grid with a maximum touch force in touch locations greater than the first threshold, and finally sequentially traverse other adjacent location grids on the touchscreen from near to far by using the location grid with the maximum touch force as a start point and using a second threshold as a condition, to finally determine the first touch area. In some embodiments of this application, the second threshold is less than the first threshold.

In some embodiments of this application, the first threshold and the second threshold may be determined and preset in the electronic device based on an empirical value or through much detection of the touch force of the touch operation. For example, the first threshold is 600 nF (nF), and the second threshold is 400 nF; or the first threshold is 800 nF, and the second threshold is 600 nF. This is not limited in this embodiment of this application, and is determined based on a specific experimental detection result, a touch sensing capability, a related setting, and the like of the electronic device.

When a touch force detected at a location is greater than a specific strength threshold, the electronic device usually considers that the location is subject to touch effect. When an absolute value of a capacitive signal strength at a location is not greater than a specific strength threshold, the electronic device usually considers that the location is not subject to touch effect. Through analyzing the touch force at each location in the first touch information, the electronic device can identify a touch area on which touch effect is performed.

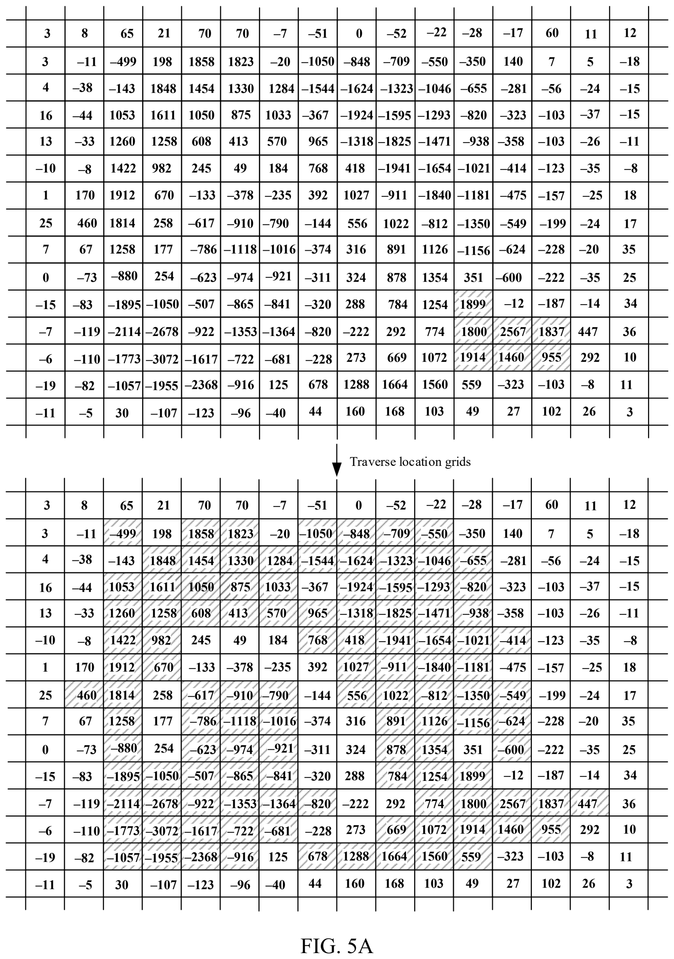

For example, the touch force is represented by a capacitive signal strength, and the first touch information is shown in FIG. 4. It is assumed that the first threshold is 600 nF and the second threshold is 400 nF. The electronic device may first identify, based on 600 nF, a plurality of location grids in which absolute values of capacitive signal strengths are greater than 600 nF on the touchscreen. Then, the electronic device may identify a location grid in which the absolute value of the capacitive signal strength is the largest (for example, a location grid in which the capacitive signal strength is 2567 nF in FIG. 4) in the plurality of location grids. Finally, as shown in FIG. 5A, the electronic device may sequentially traverse other adjacent location grids on the touchscreen from near to far by using the location grid with the capacitive signal strength of 2567 nF as a start point and using the absolute value greater than 400 nF as a condition, to finally obtain an interconnected area including a plurality of location grids in which the absolute values of the capacitive signal strengths are greater than 400 nF, namely, the first touch area on which touch affect is performed.

During location grid traversal, for example, as shown in FIG. 5A, eight location grids around the location grid with the capacitive signal strength of 2567 nF may be first traversed by using the location grid with the capacitive signal strength of 2567 nF as a start point, and a location grid in which the absolute value of the capacitive signal strength is greater than 400 nF (as shown in FIG. 5A, location grids that are with capacitive signal strengths of 1899 nF, 1800 nF, 1914 nF, 1460 nF, 955 nF, and 1837 nF and that are adjacent to the location grid with the capacitive signal strength of 2567 nF) is added to the interconnected area. Then, eight location grids around the location grids with capacitive signal strengths of 1899 nF, 1800 nF, 1914 nF, 1460 nF, 955 nF, and 1837 nF respectively are traversed by using the location grids with the capacitive signal strengths of 1899 nF, 1800 nF, 1914 nF, 1460 nF, 955 nF, and 1837 nF respectively as start points, and the location grid in which the absolute value of the capacitive signal strength is greater than 400 nF is added to the interconnected area. By analogy, an interconnected first touch area may be obtained.

S303: The electronic device identifies whether there is water in the first touch area.

In a possible implementation, the electronic device may determine, by analyzing a capacitive signal strength in the first touch area, whether touch effect on the first touch area is from the water. For example, the electronic device may determine, by collecting statistics about capacitive signal strength distribution in the first touch area, whether the touch effect on the first touch area is from the water, and further identify whether there is water in the first touch area.

In some embodiments, the first touch area includes a first area and a second area. The electronic device may identify, based on distribution of a positive capacitive signal strength and a negative capacitive signal strength in the first area and distribution of a positive capacitive signal strength and a negative capacitive signal strength in the second area, whether there is water in the first touch area.

In an example, if a quantity (denoted as N1) of touch locations in which the capacitive signal strengths are negative values in the first touch area is greater than a quantity (denoted as N2) of touch locations in which the capacitive signal strengths are positive values in the first touch area, and if a difference between N1 and N2 is greater than a preset value (for example, denoted as a first value), the electronic device may determine that there is water in the first touch area. If a result of N1-N2 is less than or equal to the first value, the electronic device may determine that there is no water in the first touch area.

In an example, if a sum (denoted as M1) of absolute values of the capacitive signal strengths with negative values in the first touch area is greater than a sum (denoted as M2) of absolute values of the capacitive signal strengths with positive values in the first touch area, and if a difference between M1 and M2 is greater than a preset value (for example, denoted as a second value), the electronic device may determine that there is water in the first touch area. If a result of M1-M2 is less than or equal to the second value, the electronic device may determine that there is no water in the first touch area.

In an example, if the result of N1-N2 is greater than the first value and the result of M1-M2 is greater than the second value, the electronic device may determine that there is water in the first touch area. If the result of N1-N2 is less than or equal to the second value and the result of M1-M2 is less than or equal to the second value, the electronic device may determine that there is no water in the first touch area.

It may be understood that, if touch effect on the touchscreen is caused by a touch of a finger of the user or a touch of a touch auxiliary tool like a stylus, a touch pen, or a touch ball, the capacitive signal strength in the touch area is usually a positive value, or most of the capacitive signal strengths are positive values. However, if touch effect on the touchscreen is caused by water, the capacitive signal strength in the touch area is usually a negative value, or most of the capacitive signal strengths are negative values. Based on this difference in physical characteristics, in this solution, whether there is water in the first touch area can be accurately identified by collecting statistics about distribution of a positive and negative capacitive signal and/or a positive and negative capacitive signal strength in the first touch area.

It should be noted that the foregoing methods for determining whether the touch effect on the first touch area is from water are merely used as several examples. This is not specifically limited in embodiments of this application. For example, in some embodiments of this application, a ratio of N1 to N2 may be compared with a preset value (for example, 1.5), to determine whether the touch effect on the first touch area is from water, if the ratio of N1 to N2 is greater than 1.5, it is determined that the touch effect on the first touch area is from water; or if the ratio of N1 to N2 is less than or equal to 1.5, it is determined that the touch effect on the first touch area is not from water. For another example, in some embodiments of this application, a ratio of M1 to M2 may be compared with a preset value (for example, 1.5), to determine whether the touch effect on the first touch area is from water, if the ratio of M1 to M2 is greater than 1.5, it is determined that the touch effect on the first touch area is from water; or if the ratio of M1 to M2 is less than or equal to 1.5, it is determined that the touch effect on the first touch area is not from water.

In this embodiment of this application, only an example in which a capacitive signal strength caused by water is usually a negative value or most of the capacitive signal strength is a negative value is used, and this is not specifically limited. For another example, in some embodiments of this application, if the result of N2-N1 is greater than the first value and the result of M2-M1 is greater than the second value, the electronic device may determine that there is water in the first touch area. If the result of N2-N1 is less than or equal to the second value and the result of M2-M1 is less than or equal to the second value, the electronic device may determine that there is no water in the first touch area. Alternatively, if a ratio of N2 to N1 is greater than 1.5, it is determined that the touch effect on the first touch area is from water; or if a ratio of N2 to N1 is less than or equal to 1.5, it is determined that the touch effect on the first touch area is not from water.

In some embodiments of this application, that there is water in the first touch area includes: Water is distributed in the first touch area and is not touched by the user. In this case, the electronic device gives up reporting a forecast point in the first touch area.

In some embodiments of this application, that there is water in the first touch area includes: Water is distributed in a part of the first touch area, and another part of the first touch area is touched by the user. For example, the first touch area includes a first area and a second area, water is distributed in the first area, and the second area is touched by the user, the electronic device reports a touch point in the second area and gives up reporting a forecast point in the first area.

In some embodiments of this application, if it is identified that water is distributed in the first touch area and is not touched by the user, the electronic device continues to perform S304A; or if it is not identified that there in water in the first touch area, the electronic device continues to perform S304B.

S304A: The electronic device gives up performing touch point reporting based on the first touch information.

In some embodiments of this application, the electronic device gives up performing touch point reporting based on the first touch information. For example, the electronic device gives up reporting a forecast point in the first touch area.

When the electronic device gives up performing touch point reporting based on the first touch information, the electronic device does not make any response based on the first touch information. Therefore, problems of misidentification and misresponse of touch point reporting caused by water can be avoided, and user experience can be improved.

S304B: The electronic device performs touch point reporting based on the first touch information, and determines a touch operation corresponding to the first touch information.

In some embodiments of this application, the electronic device performs touch point reporting based on the first touch information. For example, the electronic device reports a touch point in the first touch area.

In an example, the electronic device may determine a corresponding touch operation based on the first touch information by using the InputReader provided by the input flinger service.

Then, the electronic device may perform a subsequent response phase. For example, the electronic device converts the touch operation corresponding to the first touch information into a specific input event, and then distributes the specific input event to a corresponding activity (Activity) for response. For a specific process in which the electronic device responds to the touch operation of the user, refer to a conventional technology, this is not specifically limited in this embodiment of this application.

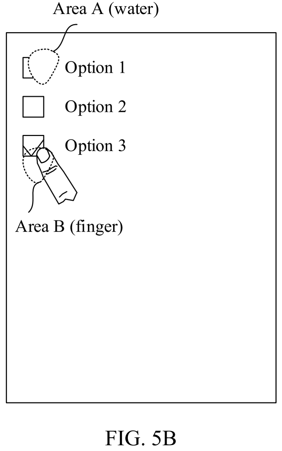

It may be understood that, based on the method for identifying a touch operation shown in FIG. 3, the electronic device identifies, by analyzing detected touch information from the touchscreen, a touch area on which touch effect is performed, and then determines, by collecting statistics on capacitive signal strength distribution in the touch area, whether the touch effect performed on the touch area is from water, to identify whether there is water in the touch area. Based on this, when identifying that there is water in the touch area, the electronic device may give up performing touch point reporting based on the detected touch information, and therefore does not make any response based on the touch information. In this solution, problems of misidentification and misresponse of a touch point caused by water can be avoided. This improves user experience. When detecting a plurality of touch areas, for example, when detecting an area A and an area B shown in FIG. 5B, the electronic device may not respond to touch effect on the area A and respond only to touch effect on the area B when identifying that there is water in the area A and there is no water in the area B. As shown in FIG. 5B, the electronic device displays effect of selecting an option in the area B.

In some embodiments of this application, to provide better touchscreen use experience for the user, the electronic device may further identify, by comparing multi-frame touch information that is detected a plurality of times and that is from the touchscreen, whether there is track water on the touchscreen, and suppress touch point reporting in a screen area through which the track water passes.

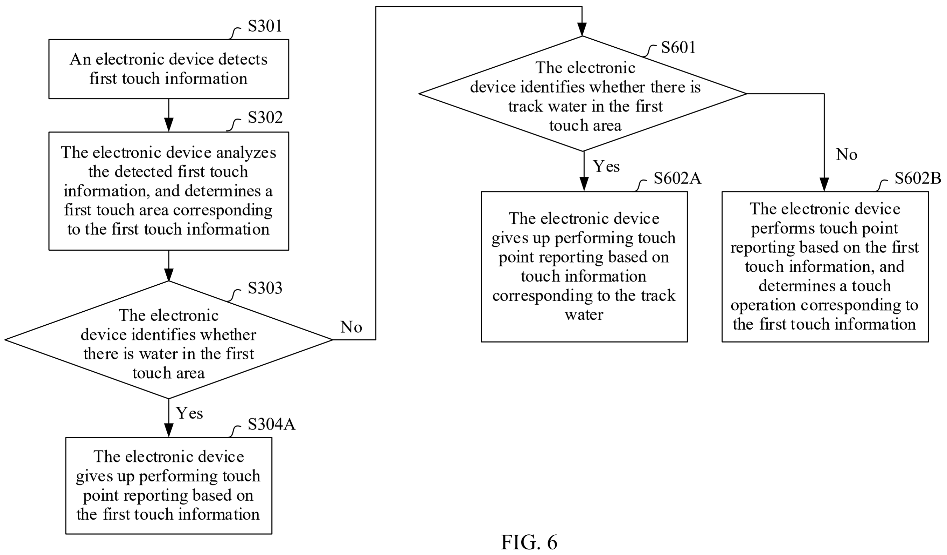

In some embodiments of this application, the electronic device may identify, based on a capacitive signal strength in historical touch information (for example, first historical touch information) and current touch information (for example, the first touch information), whether there is track water on the touchscreen. In an example, FIG. 6 is a flowchart of another method for identifying a touch operation according to an embodiment of this application. As shown in FIG. 3, after S301 to S303 are performed, if the electronic device identifies that there is water in the first touch area, the electronic device performs S304A; or if the electronic device does not identify that there is water in the first touch area, the electronic device performs S601.

S601: The electronic device identifies whether there is track water in the first touch area.

In some embodiments of this application, the track water is water whose touch area on the touchscreen changes. For example, the change of the contact area of the track water with the touchscreen may be caused by water flow, or may be caused by water movement driven by a touch operation of a finger of the user. This is not specifically limited in this embodiment of this application.

In some embodiments of this application, the first touch area includes a first area and a second area.

In some embodiments of this application, the electronic device may identify, based on first historical touch information, a capacitive signal strength of the first area, and a capacitive signal strength of the second area, whether there is track water in the first touch area. For example, the first area is a touch area of water (for example, track water), and the second area is a touch area of a finger. For another example, the second area is a touch area of water (for example, track water), and the first area is a touch area of a finger.

For example, the first historical touch information is touch information that is related to first touch information and that is detected last time. In some embodiments of this application, the electronic device may identify, by comparing the first touch information with touch information detected last time, whether there is track water in the first touch area. For example, the first touch information is an N^{th} (N is a positive integer) piece of touch information detected by the electronic device. The electronic device may identify, by comparing the first historical touch information, the capacitive signal strength of the first area, and the capacitive signal strength of the second area, whether there is track water in the first touch area. The first historical touch information is an (N-1)^{th} piece of touch information detected by the electronic device.

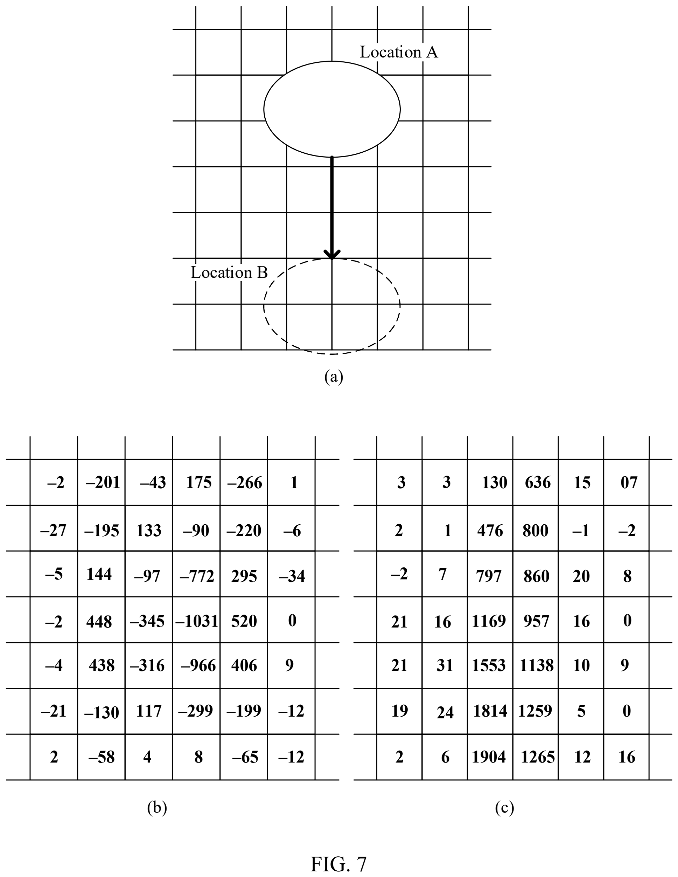

For example, when water flows from a location A to a location B in (a) in FIG. 7, touch information that is sequentially detected by the electronic device on the touchscreen may be respectively shown in (b) in FIG. 7 and (c) in FIG. 7.

In some embodiments of this application, for example, the first touch area includes the first area and the second area. In some embodiments of this application, assuming that there is water flowing from the location A of the first area in the second area, and when the second area is located in a non-edge area of the touchscreen, the electronic device can identify the water in the second area and suppress touch point reporting in S303. When the second area is located in an edge area of the touchscreen, the water in the first area may flow to the second area due to conductivity of a frame of the electronic device, and then capacitance effect may change from a negative value to a positive value. Therefore, the electronic device cannot successfully identify the water in the area in S303. In this case, the electronic device may, successfully identify, based on the touch area corresponding to the first historical touch information, distribution of a positive capacitive signal strength and a negative capacitive signal strength in the first area, and distribution of a positive capacitive signal strength and a negative capacitive signal strength in the second area and through analyzing a capacitive signal strength change in the first area and the second area, whether there is water flowing from the first area to the second area, to avoid a problem of misidentification and misresponse of a touch point caused by water flowing to the edge area.

In a possible implementation, the electronic device may first analyze the first historical touch information to determine a touch area (for example, a historical touch area) corresponding to the first historical touch information.

In an example, the electronic device may first identify a location grid with a maximum touch force on the touchscreen based on the first historical touch information, use the location grid with the maximum touch force as a start point, then sequentially traverse other adjacent location grids on the touchscreen from near to far, and sequentially add a location grid with a touch force greater than a threshold to obtain the historical touch area corresponding to the first historical touch information.

For example, the electronic device may first identify, based on the first historical touch information, a location grid with a touch force greater than a third threshold on the touchscreen, then identify a location grid with a maximum touch force in touch location greater than the third threshold, and finally sequentially traverse other adjacent location grids on the touchscreen from near to far by using the location grid with the maximum touch force as a start point and using a fourth threshold as a condition, to finally determine the historical touch area corresponding to the first historical touch information. In some embodiments of this application, the fourth threshold is less than the third threshold.

In some embodiments of this application, the third threshold and the fourth threshold may be determined and preset in the electronic device based on an empirical value or through much detection of the touch force of the touch operation. For example, the third threshold is 400 nF, and the second threshold is 200 nF; or the first threshold is 600 nF, and the second threshold is 400 nF. This is not limited in this embodiment of this application, and is determined based on a specific experimental detection result, a touch sensing capability, a related setting, and the like of the electronic device. For a specific method and process in which the electronic device determines the touch area corresponding to the first historical touch information, refer to the specific method and process in which the electronic device determines the first touch area corresponding to the first touch information in the foregoing description of S302. Details are not described herein again.

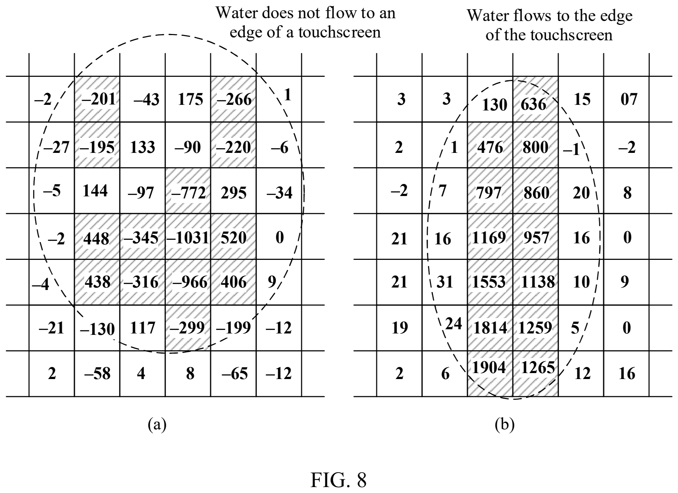

For example, the touch force is represented by an absolute value of a capacitive signal strength. Assuming that the third threshold is 400 nF and the fourth threshold is 200 nF, after the first historical touch information shown in (b) in FIG. 7 and the first touch information shown in (c) in FIG. 7 are analyzed, the historical touch area corresponding to the first historical touch information and the first touch area corresponding to the first touch information may be determined, respectively, as shown in (a) in FIG. 8 and (b) in FIG. 8.

In a possible implementation, the electronic device may identify whether there is track water in the first area and the second area based on the touch area corresponding to the first historical touch information, distribution of a positive capacitive signal strength and a negative capacitive signal strength in the first area, and distribution of a positive capacitive signal strength and a negative capacitive signal strength in the second area.

In a possible implementation, the electronic device may determine that there is track water in the first area or the second area when the following conditions are met: The electronic device identifies, based on the first historical touch information, that there is water in the touch area corresponding to the first historical touch information, the electronic device identifies, based on the first touch information, that the first area and the second area are touched and capacitive signal strengths caused by the touch are positive, the second area is an edge area of the touchscreen, and the historical touch area corresponding to the first historical touch information and the first area are interconnected or overlap partially. In some embodiments of this application, the areas partially overlap, for example, a proportion of an overlapping area between the areas is greater than a threshold (for example, 80%).

In an example, the electronic device determines, by analyzing the first historical touch information, that a quantity (for example, N1') of touch locations in which capacitive signal strengths are negative values in a touch area corresponding to the first historical touch information is greater than a quantity (for example, N2') of touch locations in which capacitive signal strengths are positive values in a historical touch area, and if a difference between N1' and N2' is greater than a first value, and/or a sum (for example, M1') of absolute values of the capacitive signal strengths that are negative values in the historical touch area is greater than a sum (for example, M2') of absolute values of the capacitive signal strengths that are positive values in the historical touch area, and a difference between M1' and M2' is greater than a second value, the electronic device determines that there is water in the historical touch area.

In an example, the electronic device finds, by analyzing the first touch information, that the first area and the second area are interconnected areas whose absolute values of the capacitive signal strengths are greater than the fourth threshold, and the second area is located in the edge area of the touchscreen. In this case, it may be determined that the first area and the second area are touched.

In an example, when water flows from the location A to the location B in (a) in FIG. 7, as shown in FIG. 8, after the water flows from top to bottom due to the frame of the electronic device, capacitance effect changes from a negative value shown in (a) in FIG. 8 to a positive value shown in (b) in FIG. 8. When detecting the change, the electronic device can identify that there is track water in the first touch area.

In some embodiments of this application, the electronic device may identify, by comparing the first touch area with a historical touch area, whether there is track water in the first touch area. For example, the first touch area is a touch area determined based on an N^{th} (N is a positive integer) piece of touch information detected by the electronic device. The electronic device may identify, by comparing the first touch area with the historical touch area, whether there is track water in the first touch area. The historical touch area is a touch area determined by the electronic device based on an (N-1)^{th} piece of detected touch information. For another example, the first touch area is a touch area determined based on an N^{th} (N is a positive integer) piece of touch information detected by the electronic device. The electronic device may identify, by comparing the first touch area with a third touch area, whether there is track water in the first touch area. The third touch area is a touch area determined by the electronic device based on an (N-2)^{th} piece of detected touch information.

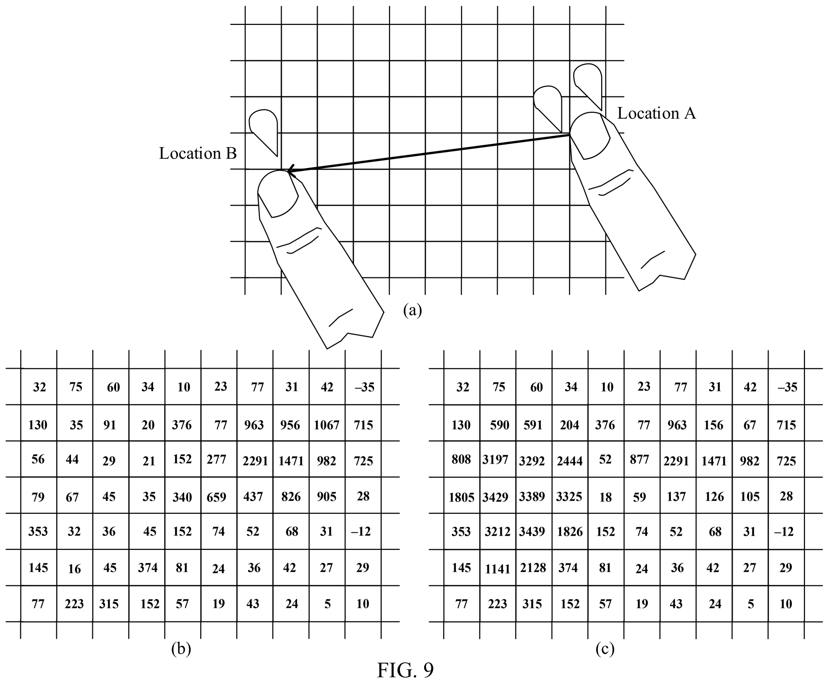

For example, when a finger of the user with water slides from a location A to a location B shown in (a) in FIG. 9, and the finger of the user is located at the location A, the first historical touch information that is detected by the electronic device on the touchscreen may be shown in (b) in FIG. 9, and when the finger of the user is located at the location B, the first touch information that is detected by the electronic device on the touchscreen may be shown in (c) in FIG. 9.

For example, the first touch area includes a first area and a second area. In some embodiments of this application, assuming that the finger of the user is with water, after the finger of the user slides from the location A to the location B shown in (a) in FIG. 9, a screen area that is detected by the electronic device and that is affected by touch effect usually includes only the second area. However, when the finger of the user is without water, after the finger of the user slides from the first area to the second area shown in (a) in FIG. 9, due to effect of water remaining in the first area after the finger of the user leaves the first area, touch effect is usually detected near a sliding track of the user in the first area. Based on this, in this embodiment of this application, the electronic device may identify, by analyzing whether touch effect is performed within a preset range of a historical touch track of the user, whether the first touch area includes a touch area that is affected by touch effect of track water.

In a possible implementation, the electronic device may first obtain the historical touch track of the user corresponding to the first historical touch information, and then determine whether the first area and the second area are located within the preset range of the historical touch area corresponding to the first historical touch information. If the first area or the second area is within the preset range of the historical touch area, the electronic device identifies that there is track water in the first area or the second area. For example, if the first area is within the preset range of the historical touch area, it is identified that there is track water in the first area.

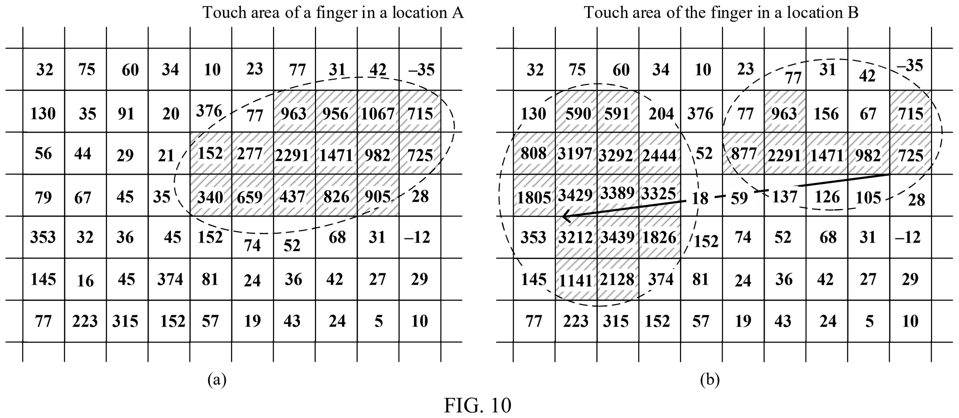

In an example, in a process in which a finger of the user with water slides from the location A to the location B shown in (a) in FIG. 9, when the finger of the user is located at the location A, detected touch information is shown in (a) in FIG. 10. When the finger of the user slides to the location B, as shown in (b) in FIG. 10, touch effect may still be detected near the location A, the touch effect is touch effect of water remaining after the finger of the user leaves the location A. In this case, the electronic device may identify, by determining whether there is a touch area that meets a preset condition within the preset range of the historical touch track, whether there is track water in the first touch area.

It should be noted that the method for identifying, by the electronic device, whether there is track water in the first touch area by determining whether there is a touch area that meets the preset condition within the preset range of the historical touch track is merely used as an example. Specific implementation details are not specifically limited in this embodiment of this application. For example, in some embodiments of this application, the electronic device may also identify, by determining whether there is a touch area that meets a preset condition within a preset range of a historical touch point, whether there is track water in the first touch area.

As shown in FIG. 6, if it is identified that water flows from another area to a touchscreen edge (for example, the second area of the first touch area), the electronic device continues to perform S602A; or if it is not identified that water flows from another area to the touchscreen edge (for example, the second area of the first touch area), the electronic device continues to perform S602B.

S602A: The electronic device gives up performing touch point reporting based on touch information corresponding to the track water.

For example, the first touch area includes a first area and a second area, the electronic device identifies that there is water in the first area, and the second area is touched by the user. In this case, the electronic device gives up performing touch point reporting based on the touch information corresponding to the track water, for example, the electronic device reports a touch point in the second area and gives up reporting a forecast point in the first area.

In some embodiments of this application, the electronic device may give up performing touch point reporting based on touch information on a path through which track water flows. For example, the electronic device may give up performing, within preset duration, touch point reporting based on touch information on the path through which the track water flows, and resume, after the preset duration, point reporting and responding based on the touch information on the path through which the track water flows. For example, if the first touch area includes the first area and the second area, and the electronic device identifies that there is water in the first area, the electronic device may give up reporting a forecast point of the first area within the preset duration.

In some embodiments of this application, the electronic device may give up performing touch point reporting based on the touch information within the preset range of the historical touch track. For example, the electronic device may give up performing touch point reporting based on the touch information within the preset range of the historical touch track within the preset duration, and resume point reporting and responding based on the touch information within the preset range of the historical touch track after the preset duration. For example, the first touch area includes the first area and the second area, and the electronic device identifies that there is water in the first area. The electronic device may abandon a forecast point within the preset range of the historical touch track within the preset duration.

When the electronic device gives up performing touch point reporting based on the touch information corresponding to the track water, the electronic device does not respond, within the preset duration, to the touch information on the flowing path or the touch information within the preset range of the historical touch track. Therefore, a problem of misidentification and misresponse of a touch point caused by the track water can be avoided, and user experience can be improved.

S602B: The electronic device performs touch point reporting based on the first touch information, and determines a touch operation corresponding to the first touch information.

In an example, the electronic device may determine a corresponding touch operation based on the first historical touch information by using the InputReader provided by the input flinger service.

Then, the electronic device may perform a subsequent response phase. For example, the electronic device converts the touch operation corresponding to the first historical touch information into a specific input event, and then distributes the specific input event to a corresponding activity (Activity) for response. For a specific process in which the electronic device responds to the touch operation of the user, refer to a conventional technology, this is not specifically limited in this embodiment of this application.

It may be understood that, according to the method for identifying a touch operation shown in FIG. 6, the electronic device identifies, by comparing the multi-frame touch information that is detected a plurality of times and that is from the touchscreen, whether there is track water on the touchscreen, and suppresses touch point reporting in the screen area through which the track water passes.

For example, when the electronic device detects water in the first area located at a non-edge of the touchscreen at a first moment, and the electronic device does not detect water at a second moment by using a preliminary water detection method (a detection method shown in FIG. 3), the electronic device detects, at the second moment (the second moment is later than the first moment), touch effect that acts on the first area and the second area at an edge of the touchscreen. The second area and the first area are interconnected, and the electronic device may determine that water flows from the non-edge area of the touchscreen to the edge area. In this process, the electronic device can accurately identify the track water in the first touch area, and suppress touch point reporting on a path through which the water flow passes, to avoid a problem of misidentification and misresponse of a touch point caused by water flowing to the edge area.

For another example, when the electronic device detects a touch operation in the first area at a first moment, and the electronic device detects, at a second moment, a second area and a third area that are touched, if the third area is within a preset range of a historical touch track (for example, close to the historical touch track), the electronic device may determine that the touch on the third area is caused by track water. In this process, the electronic device can accurately identify the track water in the first touch area, and suppress touch report points within the preset range of the historical touch track, to avoid a problem of misidentification and misresponse of a touch point caused by the track water.

In some embodiments of this application, to avoid problems such as unresponsive tapping, unresponsive sliding, tapping jitter, sliding jitter, and sliding rebound caused by touch effect of water on the touchscreen when the user performs an operation like tapping, sliding, or touching and holding, the electronic device may further optimize the first touch information based on the first historical touch information, to improve accuracy of identifying a touch operation.

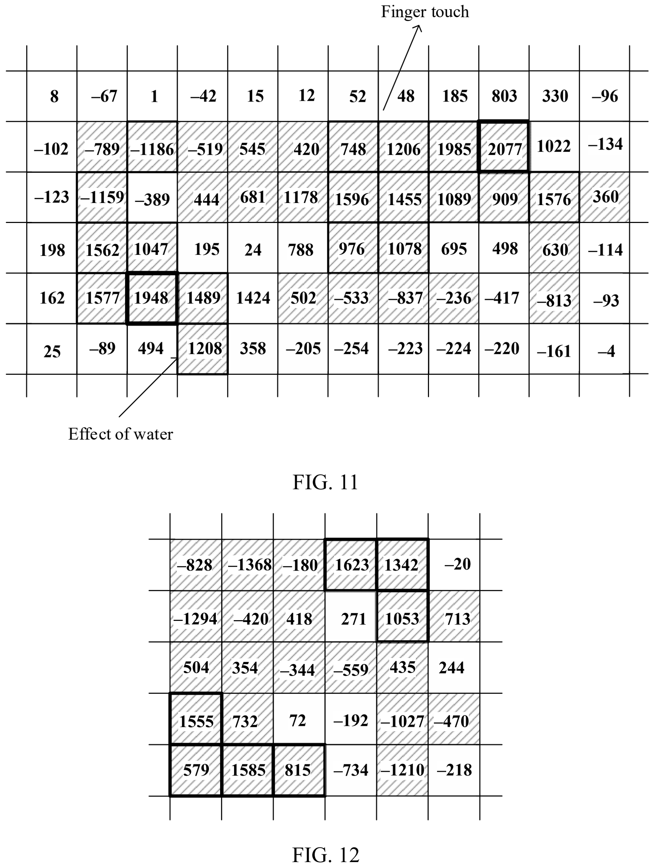

For example, as shown in FIG. 11, when a finger of the user slides on a screen with water, the finger and the water form an area, and the area includes points corresponding to a plurality of absolute peak values of capacitive signal strengths (points whose capacitive signal strengths are 1948 nF and 2077 nF respectively, as shown in FIG. 11). Apart of the absolute peak values of the capacitive signal strengths are caused by finger touch (a point whose capacitive signal strength is 2077 nF, as shown in FIG. 11), and a part of the absolute peak values of the capacitive signal strengths are caused by water (a point whose capacitive signal strength is 1948 nF, as shown in FIG. 11). According to a conventional touch operation identification technology, the electronic device performs subsequent response on a forecast point in each peak area in which a peak point is located. This causes unresponsive sliding.

For another example, as shown in FIG. 12, when the finger of the user taps on the screen with water and then is lifted, because lifting is a process, when the finger is still adhered to the water, the electronic device may still detect a capacitive signal strength whose absolute value meets a specific threshold. According to the conventional touch operation identification technology, coordinates of a touch location detected by the electronic device change greatly (as shown in FIG. 12, two peak areas of absolute values of capacitive signal strengths, namely, an area in which a point whose capacitive signal strength is 1585 nF is located and an area in which a point whose capacitive signal strength is 1623 nF is located). According to the conventional touch operation identification technology, the electronic device subsequently responds to a forecast point in each peak area, which causes unresponsive tapping.

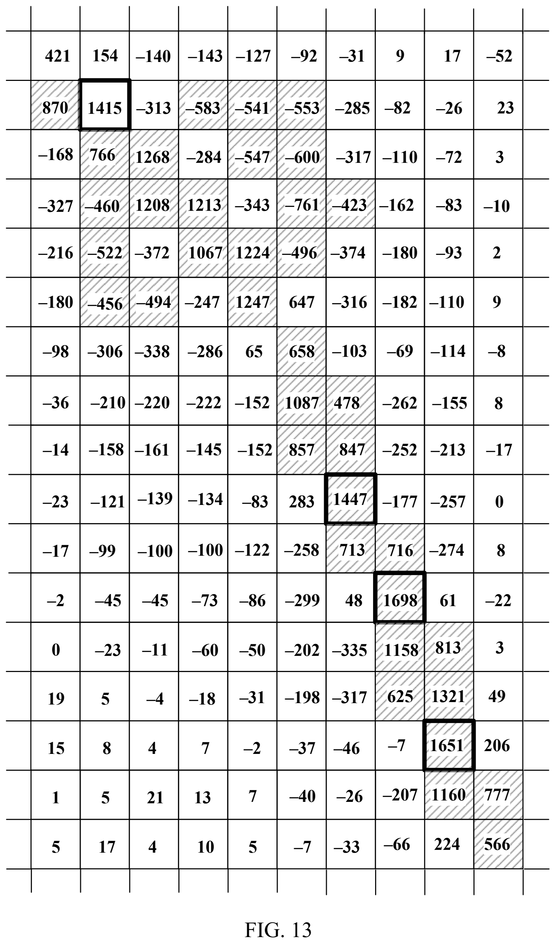

For another example, as shown in FIG. 13, when the finger of the user slides on the screen with water, the finger and the water form an area. According to a conventional touch operation identification technology, the electronic device may not accurately identify a touch location of the user during touch location identification. For example, an identified touch location may jump between a plurality of forecast points with capacitive signal strengths of 1415 nF, 1447 nF, 1698 nF, and 1651 nF shown in FIG. 3. The back-and-forth jump of the forecast points causes sliding jitter.

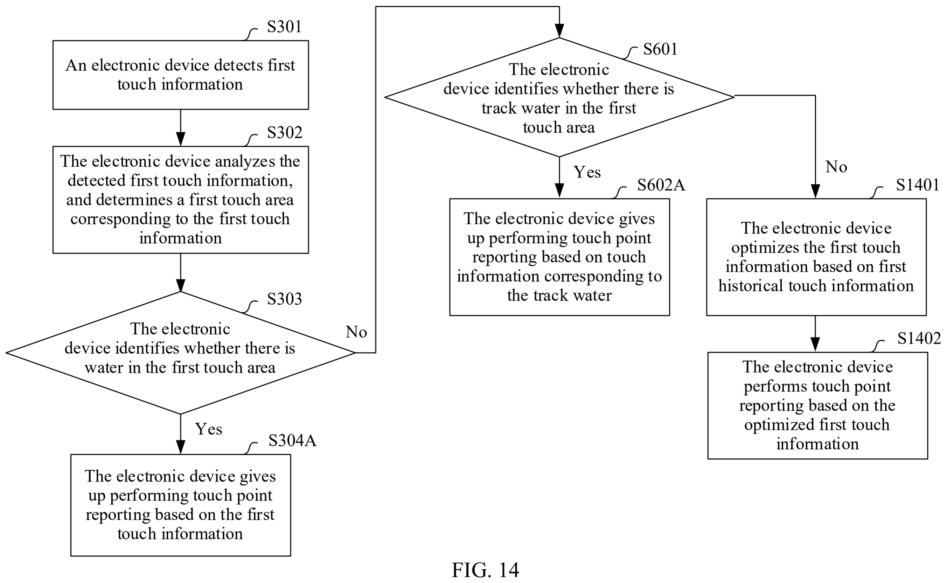

To better optimize accuracy of identifying a touch operation, in an example, FIG. 14 is a flowchart of another method for identifying a touch operation according to an embodiment of this application. As shown in FIG. 14, after S301 to S303 and S601 are performed, if the electronic device does not identify that there is track water in the first touch area, the electronic device may further perform S1401 and S1402.

S1401: The electronic device optimizes the first touch information based on the first historical touch information.

In some embodiments of this application, for example, when a latest historical touch operation is a sliding operation, the electronic device may filter a forecast point based on the historical touch operation, so that the electronic device may determine a touch point and a touch operation based on a forecast point after filtering.

In an example, the historical touch operation is a single-finger sliding operation. The electronic device may obtain a historical sliding direction and a historical sliding speed of the sliding operation based on the first historical touch information, then may predict, based on the historical sliding direction and the historical sliding speed of the sliding operation, a future touch location (referred to as a predicted location below) at which the sliding operation may act on, and filter forecast points in the first touch information based on the predicted location.

For example, the first touch area includes a first area and a second area. The electronic device may report a forecast point of the second area (that is, the forecast point of the second area is used as a touch point) when the second area is within a preset range of the predicted location, and do not report a forecast point of the first area (that is, give up using the forecast point of the first area as a touch point) when the first area is outside the preset range of the predicted location.

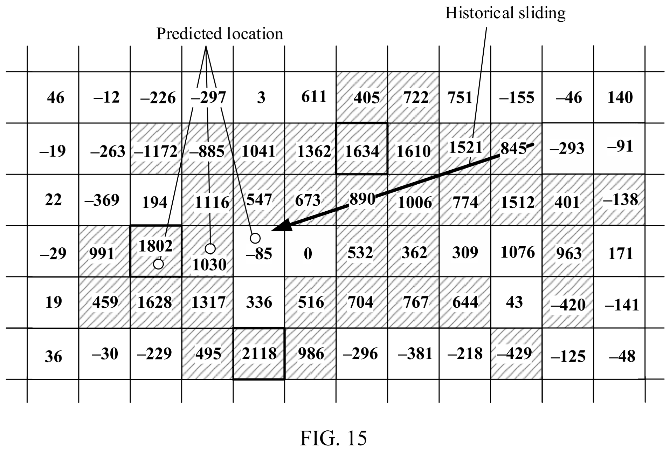

For example, the electronic device may use a forecast point that is within the preset range (for example, near) of the predicted location shown in FIG. 15 as a touch point, and give up using a forecast point that is outside the preset range of the predicted location shown in FIG. 15 as a touch point. Based on this, a problem of unresponsive sliding can be resolved.

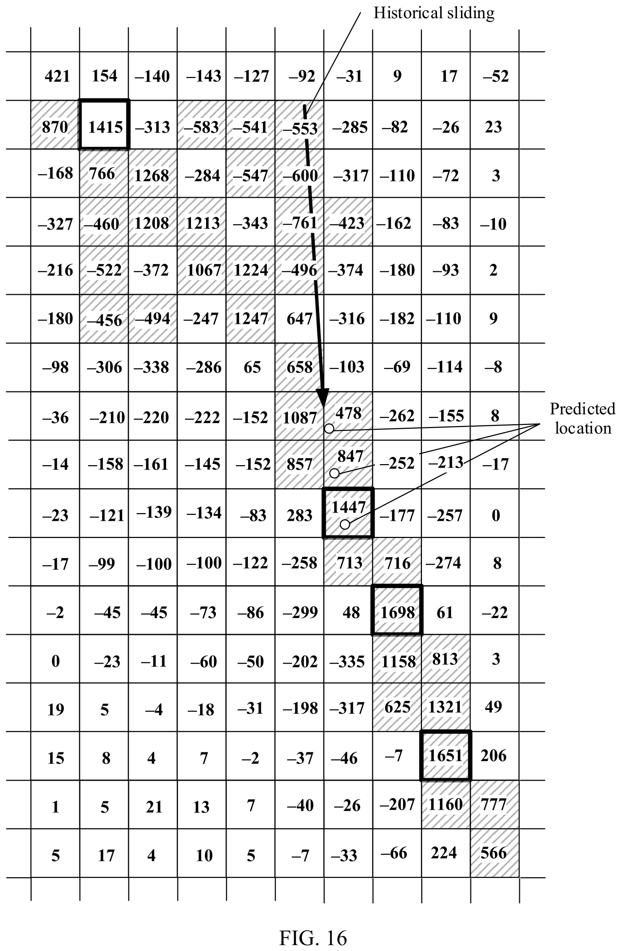

For another example, the electronic device may use a forecast point that is within the preset range (for example, near) of the predicted location shown in FIG. 16 as a touch point, and give up a forecast point that is outside the preset range of the predicted location shown in FIG. 16 as a touch point. Based on this, a problem of sliding jitter can be resolved.

In some embodiments of this application, for example, when a latest historical touch operation is a tapping operation, the electronic device may compare the first touch information with the first historical touch information, and then filter forecast points based on a comparison result, so that the electronic device can determine a touch point and a touch operation based on the forecast points after filtering.

For example, the first touch area includes the first area and the second area. In some embodiments of this application, the electronic device may determine, by comparing a capacitive signal strength with a smallest absolute value in the first area and the second area with a capacitive signal strength with a smallest absolute value in a touch area corresponding to the first historical touch information, that the first area is a water touch area.

For example, the first touch area includes the first area and the second area. In some embodiments of this application, the electronic device may determine, when a capacitive signal strength with a smallest absolute value in the first touch area decreases by more than a defined threshold compared with the capacitive signal strength with the smallest absolute value in the touch area corresponding to the first historical touch information, that the first area is a water touch area, and the first touch area does not meet a predefined condition.

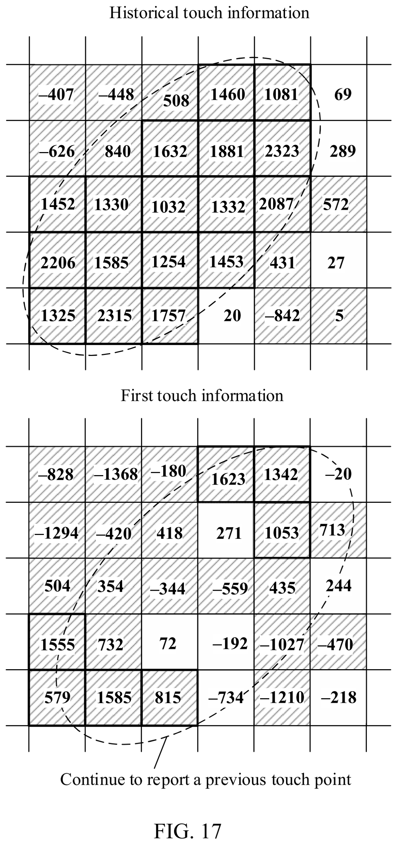

In an example, the historical touch operation is a tapping operation. As shown in FIG. 17, the electronic device may compare the capacitive signal strength with the smallest absolute value in the first area and the second area with the capacitive signal strength with the smallest absolute value in the touch area corresponding to the first historical touch information. If the capacitive signal strength with the smallest absolute value in the first area decreases by more than a defined threshold compared with the capacitive signal strength with the smallest absolute value in the touch area corresponding to the first historical touch information, and if a sum of negative signals in the first area increases by a given threshold compared with a sum of negative signals in the touch area corresponding to the first historical touch information and/or a quantity of negative signals in the first area increases by a given threshold compared with a quantity of negative signals in the touch area corresponding to the first historical touch information, it is determined that the finger is leaving the touchscreen when the first touch information is detected, and the electronic device may give up reporting the forecast point in the first area, and continue to report the forecast point in the touch area corresponding to the first historical touch information. Based on this, a problem of unresponsive tapping can be resolved.

Alternatively, in some embodiments of this application, for example, when a capacitive signal strength caused by water is usually a positive value or most of the capacitive signal strength is a positive value, the electronic device may compare the capacitive signal strength with the smallest absolute value in the first area and the second area with the capacitive signal strength with the smallest absolute value in the touch area corresponding to the first historical touch information. If the capacitive signal strength with the smallest absolute value in the first area decreases by more than a defined threshold compared with the capacitive signal strength with the smallest absolute value in the touch area corresponding to the first historical touch information, and if a sum of positive signals in the first area increases by a given threshold compared with a sum of positive signals in the touch area corresponding to the first historical touch information and/or a quantity of positive signals in the first area increases by a given threshold compared with a quantity of positive signals in the touch area corresponding to the first historical touch information, it is determined that the finger is leaving the touchscreen when the first touch information is detected, and the electronic device may give up reporting the forecast point in the first area, and continue to report the forecast point in the touch area corresponding to the first historical touch information. Based on this, a problem of unresponsive tapping can be resolved.

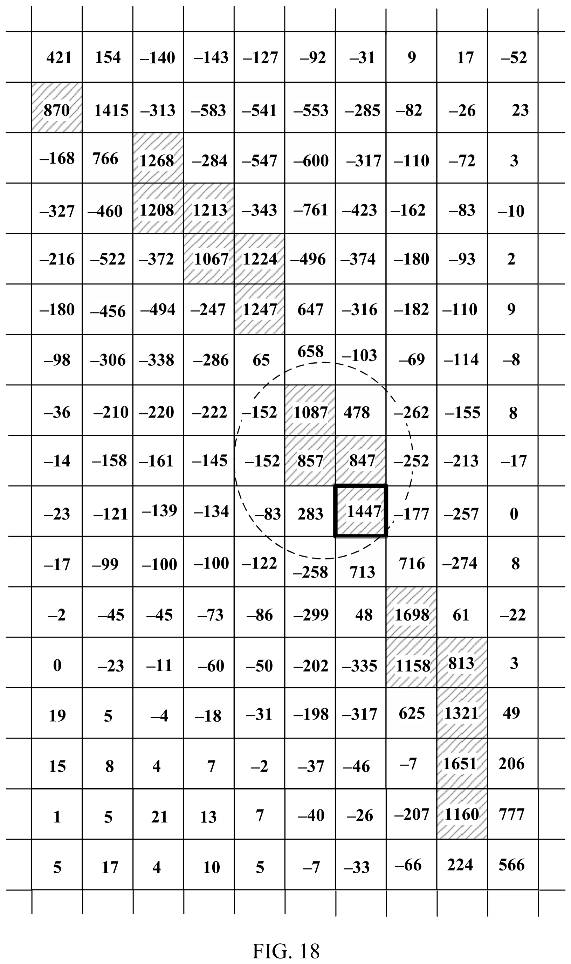

In some embodiments of this application, for example, when the latest historical touch operation is a sliding operation, the electronic device may further adjust a preset capacitive signal strength threshold during interconnected-area traversal (that is, when determining the first touch area), to reduce a problem of touch point jumping in a same interconnected area. For example, after a preset capacitive signal strength threshold during interconnected-area traversal is adjusted (for example, adjusted to 800 nF), an obtained touch area may be an interconnected area in which a forecast point with a capacitive signal strength of 1447 nF is located, as shown in FIG. 18. Based on this, a problem of sliding jitter can be resolved.

S1402: The electronic device performs touch point reporting based on the optimized first touch information.

It may be understood that, according to the method for identifying a touch operation shown in FIG. 14, the electronic device may optimize the first touch information based on the first historical touch information, to avoid problems such as unresponsive tapping, unresponsive sliding, tapping jitter, sliding jitter, and sliding rebound caused by touch effect of water on the touchscreen when the user performs an operation like tapping, sliding, or touching and holding. This improves accuracy of identifying a touch operation.

For example, when a latest historical touch operation is a sliding operation, after the first touch information is optimized, a location point outside a preset range of a predicted location is not used as a touch point. Based on this, a problem of unresponsive sliding can be resolved.

For another example, when a latest historical touch operation is a tapping operation, after the first touch information is optimized, the electronic device continues to report a latest touch point. Based on this, a problem of unresponsive tapping can be resolved.

For another example, when a latest historical touch operation is a sliding operation, after the first touch information is optimized, the electronic device obtains a more accurate touch area. Based on this, a sliding track can be smoother and evener, and a problem of sliding jitter can be resolved.

It should be understood that the solutions in embodiments of this application may be appropriately combined for use, and explanations or descriptions of terms in the embodiments may be mutually referenced or explained in the embodiments. This is not limited. For example, S601 and S602A/S602B in embodiments of this application may be performed independently of S301 to S303. For another example, S1401 and S1402 in embodiments of this application may be performed independently of S301 to S303 and S601 and S602A/S602B. For another example, S601 and S602A/S602B and S1401 and S1402 in embodiments of this application may be performed independently of S301 to S303.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

It may be understood that, to implement functions of any one of the foregoing embodiments, the electronic device includes a corresponding hardware structure and/or software module for performing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the electronic device may be divided into functional modules. For example, each functional module corresponding to each function may be obtained through division, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

It should be further understood that each module in the electronic device may be implemented in a form of software and/or hardware. This is not specifically limited herein. In other words, the device (for example, the terminal device or the proxy server) is presented in a form of a functional module. The "module" herein may be an application-specific integrated circuit ASIC, a circuit, a processor that executes one or more software or firmware programs and a memory, an integrated logic circuit, and/or another component that can provide the foregoing functions.

In an optional manner, when software is used for implementing data transmission, the data transmission may be completely or partially implemented in a form of a computer program product. The computer program product includes one or more computer instructions. When the computer program instructions are loaded and executed on a computer, the procedures or functions according to embodiments of this application are completely or partially implemented. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disk (digital video disk, DVD)), a semiconductor medium (for example, a solid-state disk solid-state disk (SSD)), or the like.

Method or algorithm steps described in combination with embodiments of this application may be implemented by hardware, or may be implemented by a processor by executing software instructions. The software instructions may include a corresponding software module. The software module may be stored in a random access memory (random access memory, RAM), a flash memory, a read-only memory (read-only memory, ROM), an erasable programmable read-only memory (erasable programmable read-only memory, EPROM), an electrically erasable read-only memory (electrically erasable programmable read-only memory, EEPROM), a register, a hard disk, a removable hard disk, a compact disc read-only memory (compact disc read-only memory, CD-ROM), or any other form of storage medium well known in the art. For example, the storage medium is coupled to the processor, so that the processor can read information from the storage medium and write information to the storage medium. Certainly, the storage medium may be a component of the processor. The processor and the storage medium may be located in an application-specific integrated circuit (application-specific integrated circuit, ASIC). In addition, the ASIC may be located in an electronic device. Certainly, the processor and the storage medium may exist as discrete components.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above.

## Claims

1. A method for identifying a touch operation, applied to an electronic device, wherein the electronic device comprises a touchscreen, and the method comprises:
detecting first touch information;
determining a first touch area on the touchscreen based on the first touch information, wherein the first touch area comprises a first area and a second area; and
obtaining first historical touch information related to the first touch information; determining, based on the first historical touch information, a capacitive signal strength of the first area, and a capacitive signal strength of the second area, that the second area is a finger touch area; and reporting a forecast point of the second area.

2. The method according to claim 1, wherein the method further comprises:
determining, based on the first historical touch information, the capacitive signal strength of the first area, and the capacitive signal strength of the second area, that the first area is a water touch area; and
skipping reporting a forecast point of the first area when reporting the forecast point of the second area.

3. The method according to claim 1 or 2, wherein determining, based on the first historical touch information, the capacitive signal strength of the first area, and the capacitive signal strength of the second area, that the second area is the finger touch area comprises:
determining, based on a touch area corresponding to the first historical touch information, distribution of a positive capacitive signal strength and a negative capacitive signal strength in the first area, and distribution of a positive capacitive signal strength and a negative capacitive signal strength in the second area, that the second area is the finger touch area.

4. The method according to any one of claims 1 to 3, wherein
the first touch information and the first historical touch information correspond to a same sliding operation of a user, and the first area is within a preset range of the touch area corresponding to the first historical touch information.

5. The method according to any one of claims 1 to 3, wherein the touch area corresponding to the first historical touch information and the first area are interconnected or overlap partially.

6. The method according to any one of claims 1 to 5, wherein the first historical touch information corresponds to a sliding operation, and the method further comprises:
obtaining a historical sliding direction and a historical sliding speed of the sliding operation based on the first historical touch information;
determining a predicted location based on the historical sliding direction and the historical sliding speed; and
reporting the forecast point of the second area when the second area is within a preset range of the predicted location.

7. The method according to claim 6, wherein the method further comprises:
when the first area is outside the preset range of the predicted location, skipping reporting the forecast point of the first area.

8. The method according to any one of claims 2 to 7, wherein the first historical touch information corresponds to a tapping operation, and determining, based on the first historical touch information, the capacitive signal strength of the first area, and the capacitive signal strength of the second area, that the second area is the finger touch area comprises:
determining, by comparing a capacitive signal strength with a smallest absolute value in the first area and the second area with a capacitive signal strength with a smallest absolute value in the touch area corresponding to the first historical touch information, that the first area is the water touch area.

9. The method according to claim 8, wherein determining, by comparing the capacitive signal strength with the smallest absolute value in the first area and the second area with the capacitive signal strength with the smallest absolute value in the touch area corresponding to the first historical touch information, that the second area is the finger touch area comprises:
determining, when a capacitive signal strength with a smallest absolute value in the first touch area decreases by more than a defined threshold compared with the capacitive signal strength with the smallest absolute value in the touch area corresponding to the first historical touch information, that the first area is the water touch area, and the first touch area does not meet a predefined condition.

10. The method according to any one of claims 1 to 5, wherein the method further comprises: detecting second touch information;
determining a second touch area based on the second touch information; and
determining, based on a capacitive signal strength of the second touch area, that the second touch area is a water touch area, and skipping reporting a forecast point of the second touch area.

11. The method according to claim 10, wherein determining, based on the capacitive signal strength of the second touch area, that the second touch area is the water touch area comprises:
when the capacitive signal strength of the second touch area meets a predefined condition, determining that the second touch area is the water touch area.

12. The method according to any one of claims 1 to 11, wherein determining the first touch area based on the first touch information comprises:
identifying a forecast point with a smallest absolute value of a capacitive signal strength based on the first touch information; and
using the forecast point with the smallest absolute value of the capacitive signal strength as a start point, sequentially traversing other adjacent forecast points on the touchscreen from near to far, to find a forecast point that meets a preset capacitive signal strength threshold, and determining the first touch area.

13. The method according to claim 12, wherein the first historical touch information corresponds to the sliding operation, and the method further comprises:
adjusting the preset capacitive signal strength threshold in a process of determining the first touch area.

14. An electronic device, wherein the electronic device comprises:
a touchscreen, configured for a user to perform a touch operation;
a memory, configured to store computer program instructions; and
a processor, configured to execute the computer program instructions, to support the electronic device in implementing the method according to any one of claims 1 to 13.

15. A computer-readable storage medium, wherein the computer-readable storage medium stores computer program instructions, and when the computer program instructions are executed by a processing circuit, the method according to any one of claims 1 to 13 is implemented.

16. A computer program product comprising instructions, wherein when the computer program product runs on a computer, the computer is enabled to perform the method according to any one of claims 1 to 13.
